# EUROPEAN PATENT SPECIFICATION

(11) **EP 3 138 103 B1**
(45) Date of publication and mention of the grant of the patent: **28.03.2018**
(21) Application number: 15707720.7
(22) Date of filing: 19.02.2015
(51) Int. Cl.: G21C 1/22, G21C 3/33, G21C 5/02, G21C 19/20, G21C 17/10

(54) **MOVEMENT OF FUEL TUBES WITHIN AN ARRAY**
BEWEGUNG VON BRENNSTOFFRÖHREN INNERHALB EINER ANORDNUNG
MOUVEMENT DE TUBES DE COMBUSTIBLE À L'INTÉRIEUR D'UN RÉSEAU

(30) Priority: 29.04.2014 GB 201407507; 15.06.2014 GB 201410659; 15.07.2014 GB 201412529; 12.10.2014 GB 201418030
(43) Date of publication of application: 08.03.2017
(73) Proprietor: Scott, Ian Richard, Stratford on Avon, Warwickshire CV37 9TQ (GB)
(72) Inventor: Scott, Ian Richard, Stratford on Avon, Warwickshire CV37 9TQ (GB)
(74) Representative: Talbot-Ponsonby, Daniel Frederick
(86) International application number: PCT/GB2015/050484
(87) International publication number: WO 2015/166203

(56) References cited:
- CA-A1- 2 622 547
- JP-A- H07 167 977
- US-A- 4 096 033
- US-A- 5 307 387
- US-A1- 2011 110 483

## Description

### Technical Field

The present invention relates to management of fission rates within a nuclear reactor. In particular it relates to management of fission rates within a reactor where the fuel is contained within a plurality of fuel tubes.

### Background

Molten salt nuclear reactors are based on a critical mass of a fissile material dissolved in a molten salt. This is commonly referred to as fuel salt. They were pioneered at the Oak Ridge National Laboratory in the 1950's to 1970's but have never been successfully commercialised. They have several potential advantages over other reactor types which include the ability to breed fissile ²³³U from thorium, production of much lower levels of transuranic actinide waste than uranium/plutonium reactors, operation at high temperatures, avoidance of accumulation of volatile radioactive fission products in solid fuel rods and much higher burn up of fissile material than is possible in conventional reactors.

GB 2508537 discloses a molten salt reactor where the core is composed of an array of generally vertical tubes immersed in a coolant tank, each tube containing molten salt fuel. For safety and efficiency reasons, it is preferred to maintain an even rate of power generation throughout the core. If the fuel tubes all contain equal concentrations of fissile material, power generation would be greatest towards the centre of the core due to the higher neutron levels. In order to mitigate this effect, it is proposed in GB 2508537 that the array is more widely spaced towards the centre (or equivalently, selected fuel tubes are left empty), or that the concentration of fissile and/or fertile isotopes is reduced towards the centre of the array.

During operation of the reactor, fuel is consumed. This reduces the power generated by the core. Therefore, to prolong the operation of the reactor, new fuel must be added to replace that which has been consumed. This may be achieved by adding quantities of fissile isotopes to the fuel tubes directly, but the build-up of fission products (many of which act as neutron poisons) makes this uneconomical after a few cycles. Spent fuel tubes may be removed from the core and replaced with fresh fuel tubes. However, in order to remove the spent fuel tubes from the array they must be lifted over the other fuel tubes. This either requires removal from the coolant, which poses a significant safety risk as the fuel tube will still be at a very high temperature, or requires the coolant to be sufficiently deep that the fuel tube can be lifted and removed from the core whist still within the coolant. This increases the size and resource cost of the reactor significantly, and is likely impractical for a molten salt reactor using a molten salt as coolant.

### Summary

According to an aspect of the present invention, there is provided a method of operating a nuclear fission reactor according to claim 1. The reactor comprises a reactor core, and a coolant tank containing coolant. The reactor core comprises an array of fuel assemblies. Each fuel assembly extends generally vertically and comprises one or more fuel tubes containing fissile fuel. The fuel tubes are immersed in the coolant. The method comprises monitoring and/or modelling fuel concentrations and/or fission rates in each of the fuel assemblies; and in dependence upon results of the monitoring and/or modelling, moving fuel assemblies horizontally within the array, without lifting any of the fuel tubes from the array of fuel assemblies, in order to control fission rates in the reactor core. A spent fuel assembly is moved to a horizontal periphery of the array without lifting the fuel assembly from the array by moving a row or part row of the array of fuel assemblies towards the periphery of the array. The spent fuel assembly can then be removed from the horizontal periphery of the array into a spent fuel storage area within the coolant tank without lifting the spent fuel assembly from the coolant.

According to a further aspect of the present invention, there is provided a nuclear fission reactor according to claim 10. The reactor comprises a core, a coolant tank containing coolant, a fuel assembly moving unit, and a reactor core controller. The core comprises an array of fuel assemblies, each fuel assembly extending generally vertically and comprising one or more fuel tubes containing fissile fuel. The fuel tubes are immersed in the coolant. The fuel assembly moving unit is configured to move fuel assemblies horizontally within the array without any of lifting the fuel assemblies from the array of fuel assemblies. A spent fuel assembly is moved to a horizontal periphery of the array without lifting the fuel assembly from the array by moving a row or part row of the array of fuel assemblies towards the periphery of the array. The spent fuel assembly can then be removed from the horizontal periphery of the array into a spent fuel storage area within the coolant tank without lifting the spent fuel assembly from the coolant. The reactor core controller is configured to determine a new configuration of the fuel assembly units, and to cause the fuel assembly moving unit to move fuel assemblies in order to achieve the new configuration.

Further aspects of the invention are set out in claim 2 et seq.

### Brief Description of the Drawings

Some preferred embodiments will now be described by way of example only and with reference to the accompanying drawings, in which:
Figure 1 is a top-down view of a part of an exemplary array of fuel assemblies;
Figure 2 is a top-down view of an exemplary fission reactor;
Figures 3A to 3E are top-down views of an exemplary array of fuel assemblies;
Figure 4 is a block diagram of a reactor;
Figure 5 is a side view of an exemplary fuel assembly.

### Detailed Description

In order to address the problems described above and allow the reactor to operate efficiently, a solution is proposed where vertical fuel tubes can be moved within the array and removed from the array without the need to lift them above the array. In order to facilitate this, the array is divided into a number of fuel assemblies which can be moved horizontally. Coordinated movement of these fuel assemblies can achieve a motion of fuel tubes towards the centre of the array as the fuel is used up, with fuel tubes having less than a minimum level of fissile/fertile material being moved out of the array along an "exit row". New fuel tubes may be added at the outer edges of the array. In this way, the variation of fissile material concentration with position can be substantially maintained throughout the life of the reactor.

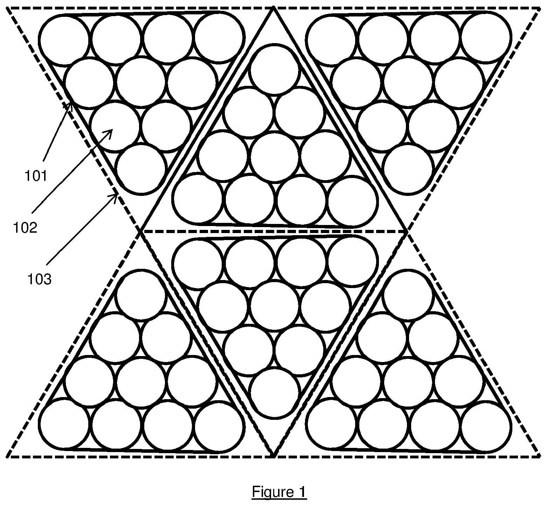

Each fuel assembly defines a cell of the array, *i.e.* a region which encloses that fuel assembly and does not contain any part of another fuel assembly. These cells may have a horizontal cross section of any shape which would permit horizontal movement of rows in the array, e.g. having a triangular or parallelogram shaped horizontal cross section (parallelogram is used herein to include rhombic, rectangular or square cross sections as well as general parallelograms). Figure 1 is a top-down view of part of an exemplary array of fuel assemblies. The fuel assemblies 101 comprise fuel tubes 102. Each fuel assembly can be considered to define a cell 103 as shown by the dashed lines. The gap between the fuel tubes and the edges of the cell of the array may be minimised in order to ensure tight packing of the fuel tubes.

As the fuel in each fuel assembly is depleted, it is moved towards the centre of the array. Once a fuel assembly is sufficiently depleted of fuel that it is no longer useful in the core ("spent"), it is moved out of the array. Note that this movement does not require lifting the fuel assemblies out of the coolant: they are moved substantially horizontally within the array (although some small vertical movement may be needed to disengage locking mechanisms).

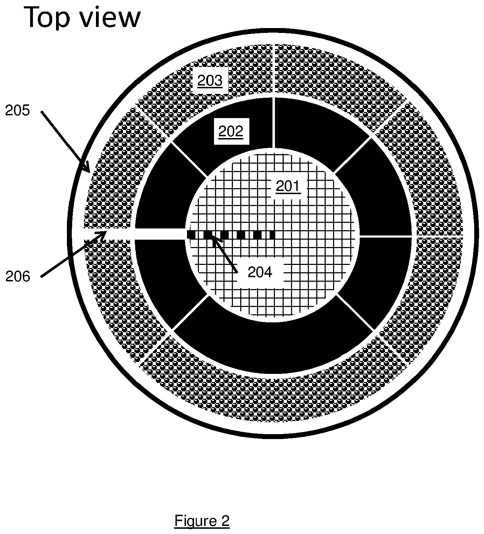

Figure 2 shows a top-down schematic view of a fission reactor. The reactor core contains an array of fuel assemblies 201 (shown in this example with a square cross section), and is surrounded by baffle segments 202 and boiler segments 203. The array has a fuel "exit row" 204 which contains spent fuel assemblies. The spent fuel assemblies are moved towards the edge of the array as new spent fuel assemblies are added to the exit row (generally from the centre of the core). The spent fuel assembly at the end of the exit row at the edge of the array is then removed away from the core into a "spent fuel store" 205 until it has cooled sufficiently to be safely extracted from the coolant. A "spent fuel channel" 206 may be provided in any reactor components surrounding the core (e.g. the baffle and boiler segments) in order for the spent fuel assemblies to be removed from the core.

The spent fuel storage location within the coolant is preferably outside any neutron reflector provided around the core (to prevent further reactions within the spent fuel), more preferably outside any boiler tubes or other heat extraction in the coolant (to allow the heat extraction to be in warmer regions of the coolant, and operate more efficiently).

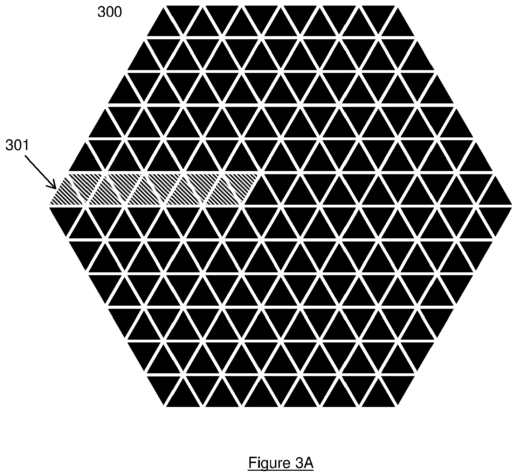

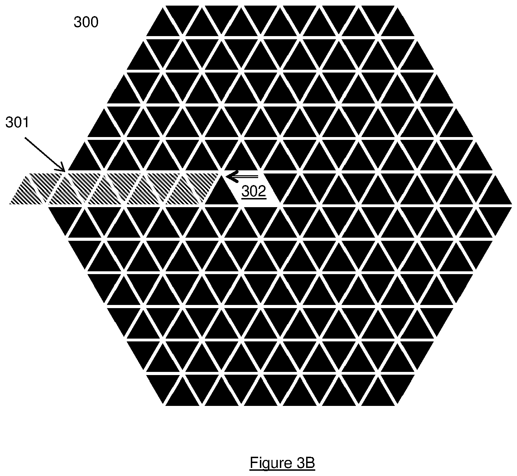

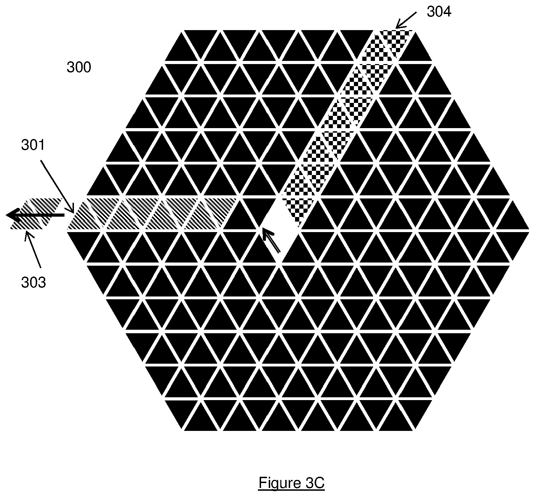

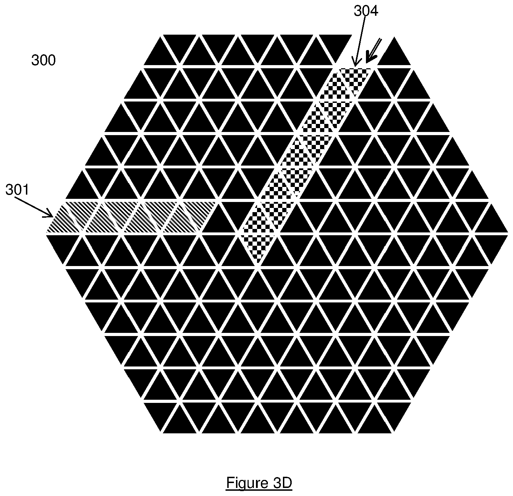

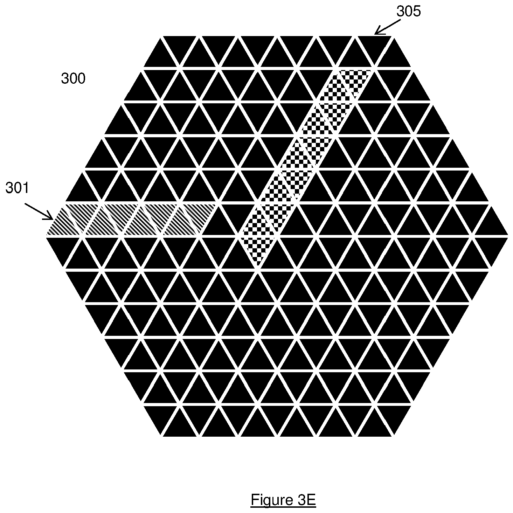

Figures 3A to 3E are schematic top-down views of an exemplary array 300 of fuel assemblies which illustrate how the fuel assemblies may be moved through the array 300. In Figure 3A, an exit row 301 is shown by the diagonal hatched fuel assemblies. These fuel assemblies are depleted of fuel. The other fuel assemblies in the array (the solid filled triangles) have fuel concentrations dependent on their positions in the array. Figures 3B and 3C show how fuel assemblies from the centre of the core may be moved into the exit row when they are depleted. In Figure 3B, the fuel assemblies of the exit row and one of the depleted fuel assemblies are moved leftwards, pushing the outermost fuel assemblies outside the edge of the array, and forming a parallelogram shaped gap 302 in the array. In Figure 3C, the other fuel assembly to be moved into the exit row is moved into this gap, and the spent fuel assemblies outside the array 303 are moved to the spent fuel storage area. The row 304 marked with a checkerboard pattern is selected to be moved closer to the core. This may be done on the basis of the current fuel concentration in each row of the array. In Figure 3D, the row 304 is moved diagonally down and leftwards to fill the gap in the centre of the array. This leaves a gap at the edge of the array which is then filled by new fuel assemblies 305 in Figure 3E.

More complicated movements can be achieved e.g. by only moving part of a row into the gap left at the centre, to form a new gap at another point in the array into which another row may be moved in a different direction (effectively "zig-zagging" tubes through the array). In general, for a triangular array, rows and parts of rows of the array may be moved out of the array, or may be moved within the array by creating a parallelogram shaped gap in the row (i.e. a gap of two array cells) and moving the row or part row to fill that gap. In the case of a parallelogramatic array, only a gap of a single cell needs to be left in order to allow movement of a row.

The new fuel assemblies may be lowered in from above the array, or they may be brought in horizontally to the edge of the array. New fuel assemblies may in principle be added at any point in the array if they are lowered in from above, but the most advantage is gained by adding them at the outside of the array and moving fuel assemblies towards the inside of the array as the concentration of fissile material in the fuel assembly decreases.

As an alternative to an exit row full of spent fuel assemblies, the exit row may be left empty of fuel assemblies with fuel assemblies that are moved to the exit row being immediately removed horizontally from the core. However, this approach may affect the stability of the fuel assemblies adjacent to the exit row. As a further alternative, a temporary exit row may be created by moving all fuel assemblies in a certain direction relative to the required exit row away from the row, forming an empty channel through which spent fuel may travel. As a yet further alternative, the fuel assemblies may be moves sequentially in rows so that the spent fuel assemblies only travels one "step" at a time (i.e. opening a gap in front of the spent fuel assemblies, and closing the gap behind the fuel assembly once it is past).
The movement is performed in dependence upon monitoring of the fission rate and/or concentration of fissile material within the fuel assemblies. This may be measured directly, or my secondary indicators such as:
- concentration of fissile material in the fuel assembly
- heat produced by the fuel assembly
- temperature of the fuel assembly
- ionising radiation produced by the fuel assembly
- rate of production of fission products.
- Neutron flux within or outside the fuel assembly

As an alternative, the fission rate and/or concentration of fissile material within the array may be modelled in advance in order to determine a movement pattern which is then followed over the lifecycle of the reactor.

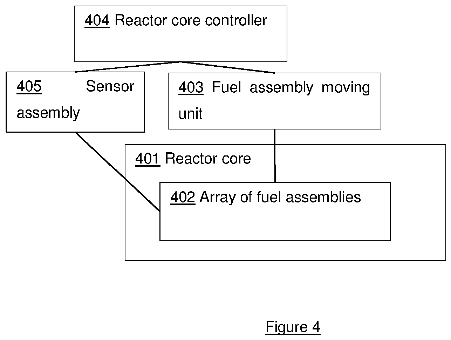

Figure 4 is a block diagram showing a reactor which may be used to implement the above method. The reactor comprises a reactor core 401 comprising an array of fuel assemblies 402 as previously described, a fuel assembly moving unit 403, and a reactor core controller 404. The fuel assembly moving unit is configured to move the fuel assemblies horizontally within the array without lifting them from the coolant, e.g. as described above. This may be achieved, for example, by a crane mechanism above the array of fuel assemblies which can grab on to connection units at the top of the fuel assemblies. The reactor core controller is configured to determine a new configuration for the fuel assemblies (e.g. from results of monitoring of the fuel assemblies as described above, or from results of modelling as described above, or retrieving a configuration previously determined from results of modelling), and to cause the fuel assembly moving unit to move the fuel assemblies to achieve the new configuration.

The reactor may further comprise a sensor assembly 405 configured to monitor fission reaction rates and/or concentrations of fissile material within the fuel assemblies, and the results of the monitoring may be used by the reactor core controller when determining the new configuration.

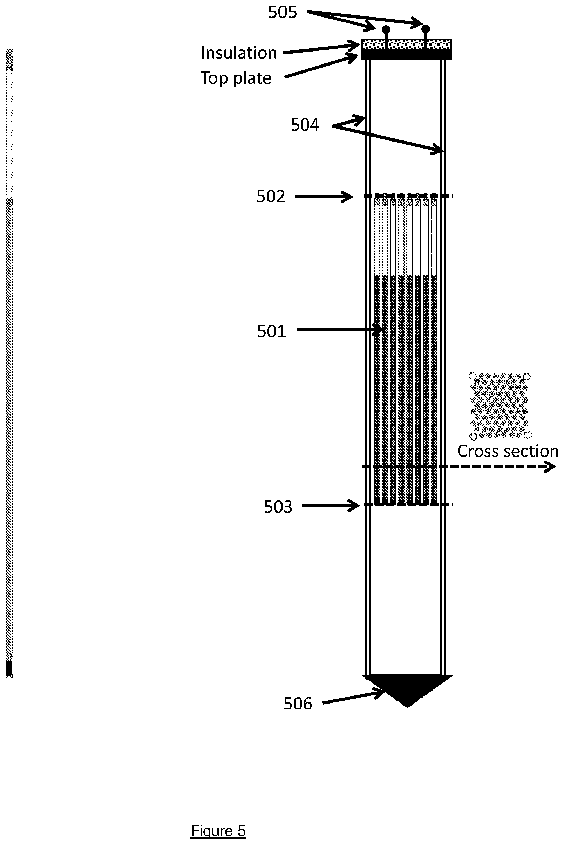

Figure 5 shows an example construction of a fuel assembly 500. The fuel assembly holds a number of fuel tubes 501, each of which has the structure illustrated on the left of the Figure. The fuel tubes are held in place within the fuel assembly by an upper 502 and lower 503 grid, which supports the tubes some distance from both the upper and lower extremities of the fuel assembly. This ensures that the fuel tubes are suspended in the coolant without being too close to the base or the top of the coolant tank. The fuel assembly is supported by structural tubes 504, and the sides of the fuel assembly are mostly open to allow coolant to flow through the fuel tubes.

The top of the fuel assembly has lifting points 505 for attachment to a fuel assembly moving unit of the reactor. The lifting points can be engaged by the fuel assembly moving unit in order to move the fuel assemblies both horizontally and vertically. Vertical movement of the fuel assemblies may be restricted other than in the spent fuel cooling location, to prevent the fuel assemblies being lifted from the coolant while hot in the event of a malfunction. It will be appreciated by the skilled person that the lifting points are only one example of a possible connection unit which can be engaged by the fuel assembly moving unit of the reactor.

The bottom end 506 of the fuel assembly is shaped to engage with a complementary socket on the floor of the reactor tank. In the example shown, the fuel assembly has a conical bottom, but it may be of any suitable shape allowing it to be received into a socket and held in place by gravity. To ensure that the fuel assembly is held securely, the fuel assembly may be constructed so as to be negatively buoyant within the molten salt coolant, e.g. by adding extra mass to the bottom of the fuel assembly. In order to allow horizontal motion of the fuel assembly, the fuel assembly is lifted a distance sufficient to disengage the bottom of the fuel assembly from the socket without removing the fuel tubes from the coolant, and it can then be moved horizontally as described above. Additionally or alternatively, mechanical, magnetic or other securing means may be used to secure the base of the fuel assembly, provided that these can be disengaged when the fuel assembly is to be moved. In the case of a magnetic connection, this may be between an electromagnet on the fuel assembly and an electromagnet or ferromagnetic or paramagnetic material in the reactor, or vice versa, or between a permanent magnet (e.g. a ferromagnetic material) on the fuel assembly and another permanent magnet or a paramagnetic material in the reactor. The fuel assembly may also have attachments allowing it to be secured to adjacent fuel assemblies. These attachments would be released to allow the fuel assemblies to move within the array. If multiple assemblies are to be moved together (e.g. as shown in Figure 3B), the assemblies may remain attached during the movement. In general, the fuel assembly will have a connection unit configured to engage with another fuel assembly, or with a securement structure of the reactor in order to releasably secure the fuel assembly in position.

The fuel assembly may comprise one or more sensors to determine the rate of fission or concentration of fissile material in the fuel tubes, alternatively each fuel tube or a subset of the fuel tubes may individually comprise such sensors and the rate or concentration may be determined individually for each fuel tube.

While such a fuel assembly management system could be applied to many reactor designs, it is particularly suitable to a molten salt reactor since the reactor operates at close to atmospheric pressure and the coolant salt is non reactive with air. In a reactor where high pressure or an air-reactive coolant salt is involved, having an open top surface of the coolant would pose an additional fire risk.

The number of fuel tubes in the fuel assemblies should be chosen in accordance with the required neutronics of the reactor. More tubes per assembly allows the individual tubes to be closer (and therefore less fuel required in each tube for a given reaction rate), but reduces the amount of fine control available when adjusting reaction rates in the core (as large banks of tubes must be moved simultaneously). In contrast, fewer tubes per assembly allows finer control of the reaction rate (in the limit where there is only a single tube per assembly, the location of each tube may be optimised), but requires greater average separation of tubes over the entire core (as the tubes at the edges of the assemblies must be sufficiently far from the adjacent assembly to allow freedom of movement).

Similarly, the shape of the fuel assemblies, the packing of the tubes within the assemblies, and the shape of the reactor core may all be varied according to the required neutronics.

In order to allow greater control over the neutronics, assemblies may be provided in which one, more or all of the fuel tubes have been replaced by empty tubes or tubes containing a neutron absorber, moderator, and/or reflector. Movement of these assemblies may be managed in order to achieve the desired fission rates across the core.

Further control of the neutronics may be achieved by inclusion of neutron absorbers of different burn rates within the fuel salt so that the reactivity of the fuel salt declines at a lower rate that that due simply to depletion of fissile isotopes.

## Claims

1. A method of operating a nuclear fission reactor, the reactor comprising a reactor core, and a coolant tank, the reactor core comprising an array of fuel assemblies, each fuel assembly extending generally vertically and comprising one or more fuel tubes containing fissile fuel, the fuel tubes being immersed in the coolant the method comprising:
monitoring and/or modelling fuel concentrations and/or fission rates in each of the fuel assemblies;
in dependence upon results of the monitoring and/or modelling, moving fuel assemblies horizontally within the array, without lifting any of the fuel assemblies from the array of fuel assemblies, in order to control fission rates in the reactor core;
moving a spent fuel assembly to a horizontal periphery of the array without lifting the fuel assembly from the array by moving a row or part row of the array of fuel assemblies towards the periphery of the array; and
removing the spent fuel assembly from the horizontal periphery of the array into a spent fuel storage area within the coolant tank without lifting the spent fuel assembly from the coolant.

2. A method according to claim 1, and comprising:
monitoring fission reaction rates and/or concentrations of fissile material within the fuel assemblies;
in dependence upon said monitoring, determining a new configuration for the array of fuel assemblies;
wherein the step of moving fuel assemblies comprises moving the fuel assemblies into the new configuration.

3. A method according to claim 1 or 2, further comprising extracting the spent fuel assembly from the coolant after it has cooled sufficiently for safe extraction.

4. A method according to any preceding claim, wherein moving the spent fuel assembly to a horizontal periphery of the array comprises moving the spent fuel assembly along a row of spent fuel assemblies within the array.

5. A method according to any preceding claim, wherein the coolant tank contains a molten salt coolant.

6. A method according to any preceding claim, wherein moving the spent fuel assembly to the spent fuel storage area comprises moving the spent fuel assembly along a spent fuel channel in reactor components surrounding the core.

7. A method according to any preceding claim, wherein the fuel assemblies have a substantially parallelogrammatic or triangular cross section.

8. A method according to any preceding claim, wherein moving the fuel assemblies comprises moving a part row of the array of fuel assemblies towards a gap in the array, the part row having one end adjacent to the gap prior to the move.

9. A method according to any preceding claim, and comprising introducing a new fuel assembly to the periphery of the array.

10. A method according to claim 9, wherein introducing the new fuel assembly comprises lowering the new fuel assembly into the coolant at a distance from the core sufficient to prevent or inhibit fission reactions in the new fuel assembly, and moving the new fuel assembly horizontally to the periphery of the array without lifting the fuel tubes of the new fuel assembly from the coolant.

11. A method according to any preceding claim, wherein moving a row or part row of fuel assemblies comprises moving the fuel assemblies in the row or part row sequentially.

12. A nuclear fission reactor, the reactor comprising a core, a coolant tank containing coolant, a fuel assembly moving unit, and a reactor core controller, wherein:
the core comprises an array of fuel assemblies, each fuel assembly extending generally vertically and comprising one or more fuel tubes containing fissile fuel;
the fuel tubes are immersed in the coolant;
the fuel assembly moving unit is configured:
to move fuel assemblies horizontally within the array without lifting any of the fuel assemblies from the array of fuel assemblies;
to move a spent fuel assembly to a horizontal periphery of the array without lifting the fuel assembly from the array by moving a row or part row of the array of fuel assemblies towards the periphery of the array; and
to remove the spent fuel assembly from the horizontal periphery of the array into a spent fuel storage area within the coolant tank without lifting the spent fuel assembly from the coolant and
the reactor core controller is configured to determine a new configuration of the fuel assembly units, and to cause the fuel assembly moving unit to move fuel assemblies in order to achieve the new configuration.

13. A nuclear fission reactor according to claim 12, further comprising a sensor assembly configured to monitor fission reaction rates and/or concentrations of fissile material within the fuel assemblies, and wherein the reactor core controller is configured to determine the new configuration of the fuel assemblies in dependence upon said monitoring.

14. A nuclear fission reactor according to claim 12 or 13, wherein the reactor core controller is configured to detect spent fuel assemblies, and to cause the fuel assembly moving unit to move spent fuel assemblies to a horizontal periphery of the array.

15. A nuclear fission reactor according to claim 14, wherein the spent fuel storage area is located beyond a spent fuel channel in reactor components surrounding the core.

16. A nuclear fission reactor according to any one of claims 12 to 15, wherein the coolant tank contains a molten salt coolant.

17. A nuclear fission reactor according to any one of claims 12 to 16, wherein the fuel assembly moving unit is configured to move part of another row of the array of fuel assemblies towards a gap in the array, the part of another row having one end adjacent to the gap prior to the move, without lifting any of the fuel tubes from the array of fuel assemblies.

18. A nuclear fission reactor according to any one of claims 12 to 17, wherein the fuel assembly moving unit is configured to introduce a new fuel assembly to the periphery of the array.

19. A nuclear fission reactor according to claim 18, wherein the fuel assembly moving unit is configured to introduce the new fuel assembly by lowering the new fuel assembly into the coolant at a distance from the core sufficient to prevent or inhibit fission reactions in the new fuel assembly, and moving the new fuel assembly horizontally to the periphery of the array without lifting the fuel tubes of the new fuel assembly from the coolant.

## Patentansprüche

1. Verfahren zum Betreiben eines Kernspaltungsreaktors, wobei der Reaktor einen Reaktorkern und einen Kühlmittelbehälter umfasst, wobei der Reaktorkern eine Anordnung von Brennelementen umfasst, wobei jedes Brennelement sich im Allgemeinen vertikal erstreckt und eine oder mehrere Brennstoffröhren umfasst, die spaltbaren Brennstoff enthalten, wobei die Brennstoffröhren in das Kühlmittel eingetaucht sind, wobei das Verfahren Folgendes umfasst:
Überwachen und/oder Modellieren von Brennstoffkonzentrationen und/oder Spaltungsraten in jedem der Brennelemente;
in Abhängigkeit von den Ergebnissen der Überwachung und/oder Modellierung horizontales Bewegen von Brennelementen innerhalb der Anordnung, ohne eines der Brennelemente aus der Anordnung von Brennelementen anzuheben, um Spaltungsraten in dem Reaktorkern zu steuern;
Bewegen eines abgebrannten Brennelements zu einem horizontalen Randbereich der Anordnung, ohne das Brennelement aus der Anordnung anzuheben, durch Bewegen einer Reihe oder Teilreihe der Anordnung von Brennelementen zu dem Randbereich der Anordnung hin; und
Entfernen des abgebrannten Brennelements aus dem horizontalen Randbereich der Anordnung in einen Lagerbereich für abgebrannte Brennelemente innerhalb des Kühlmittelbehälters, ohne das abgebrannte Brennelement aus dem Kühlmittel anzuheben.

2. Verfahren nach Anspruch 1 und umfassend:
Überwachen von Spaltungsreaktionsraten und/oder Konzentrationen von Spaltmaterial innerhalb der Brennelemente;
in Abhängigkeit von der Überwachung Bestimmen einer neuen Konfiguration für die Anordnung von Brennelementen;
wobei der Schritt des Bewegens von Brennelementen das Bewegen der Brennelemente in die neue Konfiguration umfasst.

3. Verfahren nach Anspruch 1 oder 2, ferner umfassend das Entnehmen des abgebrannten Brennelements aus dem Kühlmittel, nachdem es für eine sichere Entnahme ausreichend abgekühlt ist.

4. Verfahren nach einem der vorstehenden Ansprüche, wobei das Bewegen des abgebrannten Brennelements zu einem horizontalen Randbereich der Anordnung das Bewegen des abgebrannten Brennelements entlang einer Reihe von abgebrannten Brennelementen innerhalb der Anordnung umfasst.

5. Verfahren nach einem der vorstehenden Ansprüche, wobei der Kühlmittelbehälter ein Salzschmelzen-Kühlmittel enthält.

6. Verfahren nach einem der vorstehenden Ansprüche, wobei das Bewegen des abgebrannten Brennelements zu dem Lagerbereich für abgebrannte Brennelemente das Bewegen des abgebrannten Brennelements entlang einem Kanal für abgebrannte Brennelemente in den Kern umgebenden Reaktorkomponenten umfasst.

7. Verfahren nach einem der vorstehenden Ansprüche, wobei die Brennelemente einen im Wesentlichen parallelogrammförmigen oder dreieckigen Querschnitt besitzen.

8. Verfahren nach einem der vorstehenden Ansprüche, wobei das Bewegen der Brennelemente das Bewegen einer Teilreihe der Anordnung von Brennelementen zu einer Lücke in der Anordnung hin umfasst, wobei die Teilreihe vor der Bewegung ein der Lücke benachbartes Ende aufweist.

9. Verfahren nach einem der vorstehenden Ansprüche und umfassend das Zuführen eines neuen Brennelements zu dem Randbereich der Anordnung.

10. Verfahren nach Anspruch 9, wobei das Zuführen des neuen Brennelements das Absenken des neuen Brennelements in das Kühlmittel in einem Abstand von dem Kern umfasst, der ausreicht, um Spaltungsreaktionen in dem neuen Brennelement zu verhindern oder zu hemmen, und das Bewegen des neuen Brennelements horizontal zu dem Randbereich der Anordnung, ohne die Brennstoffröhren des neuen Brennelements aus dem Kühlmittel anzuheben.

11. Verfahren nach einem der vorstehenden Ansprüche, wobei das Bewegen einer Reihe oder Teilreihe von Brennelementen das sequenzielle Bewegen der Brennelemente in der Reihe oder Teilreihe umfasst.

12. Kernspaltungsreaktor, wobei der Reaktor einen Kern, einen Kühlmittelbehälter, der ein Kühlmittel enthält, eine Brennelement-Bewegungseinheit und eine Reaktorkern-Steuereinrichtung umfasst, wobei:
der Kern eine Anordnung von Brennelementen umfasst, wobei jedes Brennelement sich im Allgemeinen vertikal erstreckt und eine oder mehrere Brennstoffröhren umfasst, die spaltbaren Brennstoff enthalten;
die Brennstoffröhren in das Kühlmittel eingetaucht sind;
die Brennelement-Bewegungseinheit konfiguriert ist, um:
Brennelemente horizontal innerhalb der Anordnung zu bewegen, ohne eines der Brennelemente aus der Anordnung von Brennelementen anzuheben;
ein abgebranntes Brennelement zu einem horizontalen Randbereich der Anordnung zu bewegen, ohne das Brennelement aus der Anordnung anzuheben, indem eine Reihe oder Teilreihe der Anordnung von Brennelementen zu dem Randbereich der Anordnung hin bewegt wird; und
das abgebrannte Brennelement aus dem horizontalen Randbereich der Anordnung in einen Lagerbereich für abgebrannte Brennelemente innerhalb des Kühlmittelbehälters zu entfernen, ohne das abgebrannte Brennelement aus dem Kühlmittel anzuheben, und
die Reaktorkern-Steuereinrichtung dazu konfiguriert ist, eine neue Konfiguration der Brennelementeinheiten zu bestimmen und die Brennelement-Bewegungseinheit zu veranlassen, Brennelemente zu bewegen, um die neue Konfiguration zu erzielen.

13. Kernspaltungsreaktor nach Anspruch 12, ferner umfassend eine Sensoranordnung, die dazu konfiguriert ist, Spaltungsreaktionsraten und/oder Konzentrationen von Spaltmaterial innerhalb der Brennelemente zu überwachen, und wobei die Reaktorkern-Steuereinrichtung dazu konfiguriert ist, die neue Konfiguration der Brennelemente in Abhängigkeit von der Überwachung zu bestimmen.

14. Kernspaltungsreaktor nach Anspruch 12 oder 13, wobei die Reaktorkern-Steuereinrichtung dazu konfiguriert ist, abgebrannte Brennelemente zu erkennen und die Brennelement-Bewegungseinheit zu veranlassen, abgebrannte Brennelemente zu einem horizontalen Randbereich der Anordnung zu bewegen.

15. Kernspaltungsreaktor nach Anspruch 14, wobei der Lagerbereich für abgebrannte Brennelemente außerhalb eines Kanals für abgebrannte Brennelemente in den Kern umgebenden Reaktorkomponenten angeordnet ist.

16. Kernspaltungsreaktor nach einem der Ansprüche 12 bis 15, wobei der Kühlmittelbehälter ein Salzschmelzen-Kühlmittel enthält.

17. Kernspaltungsreaktor nach einem der Ansprüche 12 bis 16, wobei die Brennelement-Bewegungseinheit dazu konfiguriert ist, einen Teil einer anderen Reihe der Anordnung von Brennelementen zu einer Lücke in der Anordnung hin zu bewegen, wobei der Teil einer anderen Reihe vor der Bewegung ein der Lücke benachbartes Ende aufweist, ohne eine der Brennstoffröhren aus der Anordnung von Brennelementen anzuheben.

18. Kernspaltungsreaktor nach einem der Ansprüche 12 bis 17, wobei die Brennelement-Bewegungseinheit dazu konfiguriert ist, ein neues Brennelement dem Randbereich der Anordnung zuzuführen.

19. Kernspaltungsreaktor nach Anspruch 18, wobei die Brennelement-Bewegungseinheit dazu konfiguriert ist, das neue Brennelement zuzuführen durch Absenken des neuen Brennelements in das Kühlmittel in einem Abstand von dem Kern, der ausreicht, um Spaltungsreaktionen in dem neuen Brennelement zu verhindern oder zu hemmen, und Bewegen des neuen Brennelements horizontal zu dem Randbereich der Anordnung, ohne die Brennstoffröhren des neuen Brennelements aus dem Kühlmittel anzuheben.

## Revendications

1. Procédé de fonctionnement d'un réacteur à fission nucléaire, le réacteur comprenant un coeur de réacteur, et un réservoir de réfrigérant, le coeur de réacteur comprenant un agencement d'assemblage de combustible, chaque assemblage de combustible s'étendant de manière essentiellement verticale et comprenant un ou plusieurs tubes à combustible contenant du combustible fissile, les tubes à combustible étant immergés dans le réfrigérant, le procédé comprenant les étapes consistant à :
surveiller et/ou modéliser des concentrations de combustible et/ou des vitesses de fission dans chacun des assemblages de combustible ;
en fonction des résultats de la surveillance et/ou de la modélisation, déplacer des assemblages de combustible horizontalement au sein de l'agencement, sans soulever l'un quelconque des assemblages de combustible par rapport à l'agencement d'assemblages de combustible, afin de commander des vitesses de fission dans le coeur de réacteur ;
déplacer un assemblage de combustible épuisé vers une périphérie horizontale de l'agencement sans soulever l'assemblage de combustible par rapport à l'agencement grâce à une étape consistant à déplacer une rangée ou une rangée partielle de l'agencement d'assemblages de combustible en direction de la périphérie de l'agencement ; et
retirer l'assemblage de combustible épuisé de la périphérie horizontale de l'agencement pour l'amener dans une zone de stockage de combustible épuisé situé au sein du réservoir de réfrigérant sans soulever l'assemblage de combustible épuisé par rapport au réfrigérant.

2. Procédé selon la revendication 1, comprenant une étape consistant à :
surveiller des vitesses de réaction de fission et/ou des concentrations de matière fissile au sein des assemblages de combustible ;
en fonction de ladite surveillance, déterminer une nouvelle configuration pour l'agencement d'assemblages de combustible ;
dans lequel l'étape de déplacement d'assemblages de combustible comprend une étape consistant à déplacer les assemblages de combustible pour les amener dans la nouvelle configuration.

3. Procédé selon la revendication 1 ou 2, comprenant en outre une étape consistant à extraire l'assemblage de combustible épuisé du réfrigérant après qu'il se soit refroidi suffisamment pour une extraction en sécurité.

4. Procédé selon l'une quelconque des revendications précédentes, dans lequel l'étape de déplacement de l'assemblage de combustible épuisé vers une périphérie horizontale de l'agencement comprend une étape consistant à déplacer l'assemblage de combustible épuisé le long d'une rangée d'assemblages de combustible épuisés au sein de l'agencement.

5. Procédé selon l'une quelconque des revendications précédentes, dans lequel le réservoir de réfrigérant contient un réfrigérant à base de sel fondu.

6. Procédé selon l'une quelconque des revendications précédentes, dans lequel l'étape de déplacement de l'assemblage de combustible épuisé vers la zone de stockage de combustible épuisé comprend une étape consistant à déplacer l'assemblage de combustible épuisé le long d'un canal de combustible épuisé dans des composants de réacteur entourant le coeur.

7. Procédé selon l'une quelconque des revendications précédentes, dans lequel les assemblages de combustible présentent une section transversale essentiellement parallélogrammatique ou triangulaire.

8. Procédé selon l'une quelconque des revendications précédentes, dans lequel l'étape de déplacement des assemblages de combustible comprend une étape consistant à déplacer une rangée partielle de l'agencement d'assemblages de combustible en direction d'un espace vide présent dans l'agencement, la rangée partielle présentant une extrémité adjacente audit espace vide préalablement au déplacement.

9. Procédé selon l'une quelconque des revendications précédentes, comprenant une étape consistant à mettre en place un nouvel assemblage de combustible à la périphérie de l'agencement.

10. Procédé selon la revendication 9, dans lequel l'étape de mise en place du nouvel assemblage de combustible comprend une étape consistant à descendre le nouvel assemblage de combustible dans le réfrigérant à une distance du coeur suffisante pour prévenir ou empêcher des réactions de fission dans le nouvel assemblage de combustible, et déplacer le nouvel assemblage de combustible horizontalement vers la périphérie de l'agencement sans soulever les tubes à combustible du nouvel assemblage de combustible par rapport au réfrigérant.

11. Procédé selon l'une quelconque des revendications précédentes, dans lequel l'étape de déplacement d'une rangée ou d'une rangée partielle d'assemblages de combustible comprend une étape consistant à déplacer les assemblages de combustible de manière séquentielle dans la rangée ou la rangée partielle.

12. Réacteur à fission nucléaire, le réacteur comprenant un coeur, un réservoir de réfrigérant contenant du réfrigérant, une unité de déplacement d'assemblage de combustible et un dispositif de commande de coeur de réacteur, dans lequel :
le coeur comprend un agencement d'assemblages de combustible, chaque assemblage de combustible s'étendant de manière essentiellement verticale et comprenant un ou plusieurs tubes à combustible contenant du combustible fissile ;
les tubes à combustible sont immergés dans le réfrigérant ;
l'unité de déplacement d'assemblage de combustible est configurée :
pour déplacer des assemblages de combustible horizontalement au sein de l'agencement sans soulever l'un quelconque des assemblages de combustible par rapport à l'agencement d'assemblages de combustible ;
pour déplacer un assemblage de combustible épuisé vers une périphérie horizontale de l'agencement sans soulever l'assemblage de combustible par rapport à l'agencement grâce à une étape consistant à déplacer une rangée ou une rangée partielle de l'agencement d'assemblages de combustible en direction de la périphérie de l'agencement ; et
pour retirer l'assemblage de combustible épuisé de la périphérie horizontale de l'agencement et l'amener dans une zone de stockage de combustible épuisé au sein du réservoir de réfrigérant sans soulever l'assemblage de combustible épuisé par rapport au réfrigérant et
le dispositif de commande de coeur de réacteur est configuré pour déterminer une nouvelle configuration des unités d'assemblage de combustible, et pour amener l'unité de déplacement d'assemblage de combustible à déplacer des assemblages de combustible afin d'obtenir la nouvelle configuration.

13. Réacteur à fission nucléaire selon la revendication 12, comprenant en outre un ensemble formant capteur configuré pour surveiller des vitesses de réaction de fission et/ou des concentrations de matière fissile au sein des assemblages de combustible, et dans lequel le dispositif de commande de coeur de réacteur est configuré pour déterminer la nouvelle configuration des assemblages de combustible en fonction de ladite surveillance.

14. Réacteur à fission nucléaire selon la revendication 12 ou 13, dans lequel le dispositif de commande de coeur de réacteur est configuré pour détecter des assemblages de combustible épuisés, et pour amener l'unité de déplacement d'assemblage de combustible à déplacer des assemblages de combustible épuisés vers une périphérie horizontale de l'agencement.

15. Réacteur à fission nucléaire selon la revendication 14, dans lequel la zone de stockage de combustible épuisé est située au-delà d'un canal de combustible épuisé dans des composants de réacteur entourant le coeur.

16. Réacteur à fission nucléaire selon l'une quelconque des revendications 12 à 15, dans lequel le réservoir de réfrigérant contient un réfrigérant à base de sel fondu.

17. Réacteur à fission nucléaire selon l'une quelconque des revendications 12 à 16, dans lequel l'unité de déplacement d'assemblage de combustible est configurée pour déplacer une partie d'une autre rangée de l'agencement d'assemblages de combustible en direction d'un espace vide présent dans l'agencement, la partie d'une autre rangée présentant une extrémité adjacente audit espace vide préalablement audit déplacement, sans soulever l'un quelconque des tubes à combustible par rapport à l'agencement d'assemblages de combustible.

18. Réacteur à fission nucléaire selon l'une quelconque des revendications 12 à 17, dans lequel l'unité de déplacement d'assemblage de combustible est configurée pour mettre en place un nouvel assemblage de combustible à la périphérie de l'agencement.

19. Réacteur à fission nucléaire selon la revendication 18, dans lequel l'unité de déplacement d'assemblage de combustible est configurée pour mettre en place le nouvel assemblage de combustible grâce à une étape consistant à descendre le nouvel assemblage de combustible dans le réfrigérant à une distance du coeur suffisante pour prévenir ou empêcher des réactions de fission dans le nouvel assemblage de combustible, et déplacer le nouvel assemblage de combustible horizontalement vers la périphérie de l'agencement sans soulever les tubes à combustible du nouvel assemblage de combustible par rapport au réfrigérant.
